# EUROPÄISCHE PATENTSCHRIFT

(11) **EP 3 013 602 B1**
(45) Veröffentlichungstag und Bekanntmachung des Hinweises auf die Patenterteilung: **19.06.2019**
(21) Anmeldenummer: 14712656.9
(22) Anmeldetag: 25.03.2014
(51) Int. Cl.: B60C 9/06, B60C 9/10, B60C 9/12, B60C 3/04

(54) **FAHRZEUGLUFTREIFEN**
PNEUMATIC TIRE
PNEU

(30) Priorität: 25.06.2013 DE 102013106632
(43) Veröffentlichungstag der Anmeldung: 04.05.2016
(73) Patentinhaber: Continental Reifen Deutschland GmbH, 30165 Hannover (DE)
(72) Erfinder: GOOTJES, Lennert, 31515 Wunstorf (DE); KRIEGER, Ralf, 30559 Hannover (DE); PASTUOVIC, Mario, 31141 Hildesheim (DE)
(74) Vertreter: Finger, Karsten
(86) Internationale Anmeldenummer: PCT/EP2014/055894
(87) Internationale Veröffentlichungsnummer: WO 2014/206585

(56) Entgegenhaltungen:
- DE-A1- 19 545 954
- US-A- 3 280 877
- US-A- 3 989 083
- US-A- 5 025 845

## Beschreibung

Die Erfindung betrifft einen gürtellosern Fahrzeugluftreifen, insbesondere LKW-Reifen, Industriereifen oder OTR-Reifen, mit einem Verhältnis Querschnittsbreite zu Querschnittshöhe (ermittelt gemäß E.T.R.T.O.-Standards) von 1 oder 0,85 mit einer Karkasse in diagonaler Bauart mit zwei bis sechsundzwanzig übereinander angeordneten Karkasseinlagen, welche jeweils aus einem in eine Gummimatrix eingebetteten Kordgewebe aus textilen, parallel zueinander verlaufenden Festigkeitsträgern bestehen, wobei die Festigkeitsträger im Reifenzenit unter einem in allen Karkasseinlagen gleich großen spitzen Winkel zur Umfangsrichtung verlaufen.

Obwohl sich Radialreifen gegenüber Diagonalreifen in vielen Bereichen, insbesondere im PKW-Fahrzeugluftreifenbereich, durchgesetzt haben, werden Diagonalreifen sinnvollerweise nach wie vor dort eingesetzt, wo die Reifen hohen Belastungen, auch Überlast, ausgesetzt werden oder eine besondere Standsicherheit der mit diesen Reifen bestückten Fahrzeugen notwendig ist. Diagonalreifen werden daher beispielsweise auf Staplern, Fahrzeugen, die zur Handhabung von Containern eingesetzt werden, Erdbewegungsmaschinen, sowohl unter als auch über Tag, Lastkraftwagen und dergleichen verwendet. Je nach Einsatzzweck weisen Diagonalreifen ein bis drei Wulstkerne pro Wulstbereich und zwischen zwei und sechsundzwanzig Karkasseinlagen auf.

Ein gürtelloser Fahrzeugluftreifen diagonaler Bauart, welcher ein Reifen für Personenkraftwagen ist, ist beispielsweise aus der DE 195 45 954 A1 bekannt. Der Reifen weist ein Verhältnis Querschnittsbreite zu Querschnittshöhe von mehr als 1 und eine Karkasse mit insbesondere zwei Karkasseinlagen auf. Die Festigkeitsträger der beiden Karkasseinlagen schließen im Reifenzenit einen Winkel von 20° bis 40° mit der Umfangsrichtung ein. Die US 3 280 877 A offenbart einen beispielsweise vier Karkasseinlagen aufweisenden Traktorreifen diagonaler Bauart, dessen Verhältnis Querschnittshöhe zu Querschnittsbreite 0,50 bis 0,75 beträgt. Die Festigkeitsträger der Karkasseinlagen verlaufen unter Winkeln von 27° bis 33° zur Umfangsrichtung. Aus der US 5 025 845 A und der US 3 989 083 A sind Reifen diagonaler Bauart für Rennwagen bekannt, wobei die Reifen jeweils mindestens vier Karkasseinlagen aufweisen, deren Festigkeitsträger unter unterschiedlichen Winkeln zur Umfangsrichtung verlaufen.

Bei Diagonalreifen gemäß dem Stand der Technik ist es üblich, dass im fertig vulkanisierten Reifen die Festigkeitsträger in den Karkasseinlagen im Reifenzenit einen Winkel mit der Umfangsrichtung von 20° bis 45° einschließen, wobei sich die Größe des Fadenwinkels nach der Auslegung des Reifens hinsichtlich seines Verhältnisses von Querschnittsbreite zu Querschnittshöhe richtet, um dem Reifen eine stabile Form zu verleihen. Bei Reifen mit einem Verhältnis von Querschnittsbreite zu Querschnittshöhe (gemäß E.T.R.T.O.-Standards) von 1 sind Winkel von 36° bis 45° üblich, bei Reifen mit einem Verhältnis von Querschnittsbreite zu Querschnittshöhe von 0,85 Winkel von 38° bis 42°. Der Fadenwinkel wird nämlich üblicherweise derart gewählt, dass der Reifen beim Füllen mit Luft durch die Fadendehnung gleichmäßig wächst, sodass sich der Reifen auf einen größeren Durchmesser und eine größere Breite ausdehnt. Dies bedingt auch eine gleichmäßige Dehnung des Gummimaterials im Reifen.

Der Winkel der Festigkeitsträger in den Einlagen wird derart eingestellt, dass der Reifen beim Luftfüllen möglichst geringen Spannungen ausgesetzt wird. Werden die Diagonalreifen an Fahrzeugen verwendet, die beispielsweise im Underground-Mining-Bereich eingesetzt werden, so ist es besonders wichtig, dass die Reifen möglichst schnittfest sind und eine hohe Festigkeit gegen Weiterreißen besitzen. Es werden daher spezielle Kautschukmischungen für den Laufstreifenbereich des Reifens verwendet. Es lässt sich jedoch gerade bei einem Einsatz dieser Reifen im Underground-Mining-Bereich das Entstehen von Schnitten durch Gestein und Geröll nicht vermeiden. Die spannungsneutrale Auslegung des Reifens begünstigt ein Vergrößern der Risse bei jeder Reifenumdrehung.

Der Erfindung liegt somit die Aufgabe zu Grunde, die Weiterreißfestigkeit des Laufstreifens von Diagonalreifen deutlich zu verbessern.

Gelöst wird die gestellte Aufgabe erfindungsgemäß dadurch, dass der Winkel, den die Festigkeitsträger mit der Umfangsrichtung im Zenit des Reifens einschließen, bei einem Reifen mit einem Verhältnis Querschnittsbreite zu Querschnittshöhe von 1 zwischen 28° und 34°, bei einem Reifen mit einem Verhältnis Querschnittsbreite zu Querschnittshöhe von 0,85 zwischen 26° und 32° beträgt.

Ein erfindungsgemäß ausgeführter Diagonalreifen ist daher nicht mehr spannungsneutral ausgelegt. Er weist daher auch ein von spannungsneutral ausgelegten Diagonalreifen abweichendes Verhalten beim Füllen mit Luft auf. Der Reifen wächst nicht mehr im Durchmesser, weist jedoch ein etwas größeres Breitenwachstum als die Diagonalreifen gemäß dem Stand der Technik auf. Je nach der Größe des Winkels der Festigkeitsträger kann sogar ein negatives Durchmesserwachstum auftreten. Die Karkassstruktur erfindungsgemäß ausgeführter Diagonalreifen ist somit in Umfangsrichtung steifer als jene in Reifen gemäß dem Stand der Technik. Dies führt zu einer Reduktion des Rollwiderstandes und damit einem reduzierten Kraftstoffverbrauch der mit solchen Reifen bestückten Fahrzeuge. Da der an der Karkasse anhaftende Laufstreifengummi in Umfangsrichtung nicht mehr gedehnt wird, ist er steifer. Auch dieser Effekt hat eine Reduktion des Rollwiderstandes zur Folge. Darüber hinaus ist der steifere Laufstreifen gegenüber Verletzungen weniger anfällig, etwaig auftretende Schnittverletzungen werden nicht mehr erweitert sondern zusammengedrückt, wodurch eine Rissausbreitung gestoppt oder zumindest verlangsamt wird.

Bei einer bevorzugten Ausführungsform der Erfindung beträgt der Winkel, den die Festigkeitsträger in einem Reifen mit einem Verhältnis Querschnittsbreite zu Querschnittshöhe von 1 mit der Umfangsrichtung einschließen, höchstens 32°, in einem Reifen mit einem Verhältnis Querschnittsbreite zu Querschnittshöhe von 0,85 höchstens 30°. Durch eine derartige Auslegung der vorgesehenen Karkasseinlagen im Reifen wird der Laufstreifen besonders steif und gegenüber Schnittverletzungen und dergleichen besonders resistent.

Für den bevorzugten Einsatzzweck dieser Diagonalreifen als LKW-Reifen, Industriereifen oder OTR-Reifen, jeweils in den entsprechenden Dimensionen, ist es für die Stabilität der Reifen und deren Haltbarkeit vorteilhaft, wenn die Anzahl der Karkasseinlagen zwischen sechs und zweiundzwanzig, insbesondere zwischen zwölf und achtzehn, beträgt.

Zwei bis vier dieser Karkasseinlagen können sogenannte Zwischenbaulagen sein, also Karkasseinlagen, welche radial innerhalb des Laufstreifens verlaufen und lediglich den Laufstreifenbereich, gegebenenfalls noch die Schulterbereiche des Reifens, verstärken.

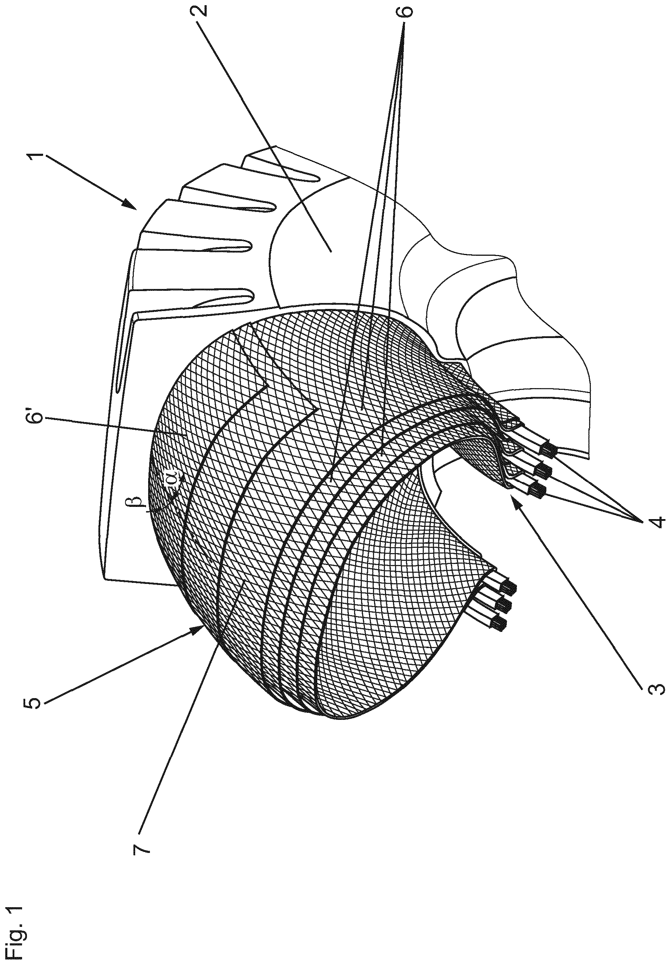

Weitere Merkmale, Vorteile und Einzelheiten der Erfindung werden nun anhand der einzigen Zeichnungsfigur (Fig. 1), die schematisch eine Ansicht eines erfindungsgemäßen Fahrzeugluftreifens in einem teilweise aufgeschnittenen Zustand mit freigelegter Karkasse zeigt, näher beschrieben.

Die Erfindung betrifft Diagonalreifen, die insbesondere als LKW-Reifen, Industriereifen und OTR-Reifen auf steinigem Untergrund und schlechten Straßen bzw. Fahrwegen Einsatz finden, und deren Verhältnis Querschnittsbreite zu Querschnittshöhe (ermittelt gemäß E.T.R.T.O.-Standards) 1 oder 0,85 beträgt.

Fig. 1 zeigt einen gürtellosen Fahrzeugluftreifen in diagonaler Bauart, welcher einen Laufstreifen 1, Seitenwände 2, Wulstbereiche 3 mit Wulstkernen 4 und eine mehrlagige Karkasse 5 aufweist. Die Karkasse 5 besteht aus mehreren Karkasseinlagen 6, 6', wobei sich die Karkasseinlagen 6 radial außerhalb einer nicht gezeigten Innenschicht bekannter Bauart über den Umfang des Reifens und in axialer Richtung zwischen den Wulstkernen 4 der beiden Wulstbereiche 3 sowie entlang und innerhalb der Seitenwände 2 und des Laufstreifens 1 erstrecken. Bei der dargestellten Ausführungsform weist jeder Wulstbereich 3 drei Wulstkerne 4 auf, die sich in bekannter Weise aus Stahlseilen zusammensetzen. Bei der gezeigten Ausführungsform sind ferner pro Wulstkernpaar vier Karkasseinlagen 6 vorgesehen, welche um die betreffenden Wulstkerne 4 von innen nach außen umgeschlagen sind, sodass der dargestellte Reifen sechszehn Karkasseinlagen 6 aufweist. Die Karkasseinlagen 6 können in bekannter Weise im Bereich der Wulstkerne 4 enden. Die Karkasseeinlagen 6' sind Zwischenbaulagen, welche sich nicht von Wulstkern 4 zu Wulstkern 4 erstrecken, sondern radial innerhalb des Laufstreifens 1 verlaufend im Reifen vorgesehen sind und derart den Laufstreifenbereich verstärken. Erfindungsgemäß ausgeführte Diagonalreifen weisen ein bis drei Wulstkerne pro Wulstbereich, ferner vorzugsweise zwischen sechs bis zweiundzwanzig Karkasseinlagen 6, 6', insbesondere zwölf bis achtzehn, davon zwei bis vier Zwischenbaulagen, auf.

Die Karkasseinlagen 6, 6' bestehen jeweils aus einem in eine Gummimatrix eingebetteten Kordgewebe aus textilen, parallel zueinander verlaufenden Festigkeitsträgern 7, welche beispielsweise Fäden aus Aramid, Polyamid oder Polyester sind. Die einzelnen Karkasseinlagen 6, 6' sind derart im Reifen verbaut, dass die Festigkeitsträger 7 von Einlage 6, 6' zu Einlage 6, 6' abwechselnd linkssteigend und rechtssteigend verlaufen, sodass ein stabiler Lagenverband mit sich kreuzenden Festigkeitsträgern 7 gebildet wird.

Im Reifenzenit, an ihrer Schnittstelle mit der Äquatorebene des Reifens, schließen die Festigkeitsträger 7 im fertig vulkanisierten Reifen mit der Umfangsrichtung des Reifens Winkel α bzw. β ein, wobei die Winkel α, β gleich groß sind. Bei einem Reifen mit einem Verhältnis Querschnittsbreite zu Querschnittshöhe von 1 betragen die Winkel α, β zwischen 28° und 34°, insbesondere bis 32°, bei einem Reifen mit einem Verhältnis Querschnittsbreite zu Querschnittshöhe von 0,85 zwischen 26° und 32°, insbesondere bis zu 30°. In sämtlichen Karkasseinlagen 6, 6' eines bestimmten Reifens sind die Winkel α, β der Festigkeitsträger 7 gleich groß, wobei Abweichungen durch Fertigungstoleranzen von 2° bis höchstens 3° möglich sind.

Der Winkel, den die Festigkeitsträger 7 in den Karkasseinlagen 6, 6' im Zenit der Reifens mit der Umfangsrichtung einschließen, ist daher kleiner als der Winkel der Festigkeitsträger in herkömmlichen Reifen mit einem Verhältnis Querschnittsbreite zu Querschnittshöhe von 1 oder 0,85. Dadurch verändert sich das Verhalten des Reifens beim Füllen mit Luft, es findet kein Durchmesserwachstum des Reifens im Bereich des Laufstreifens statt, jedoch ein größeres Breitenwachstum des Reifens. Durch den relativ geringen Winkel der Festigkeitsträger 7 relativ zu Umfangsrichtung ist die Karkassstruktur in Umfangsrichtung bei erfindungsgemäß ausgeführten Diagonalreifen steifer als bei jenen aus dem Stand der Technik. Wird der Winkel der Festigkeitsträger 7 so gewählt, dass obige Werte im fertigen Reifen vorliegen, so kann beim Füllen des Reifens mit Luft sogar ein Komprimieren des Laufstreifengummis in Umfangsrichtung stattfinden, wodurch der Laufstreifen steif wird. Die höhere Steifigkeit der Karkasse und des Laufstreifens in Umfangsrichtung reduziert den Rollwiderstand erfindungsgemäßer Reifen und damit den Kraftstoffverbrauch von Fahrzeugen mit solchen Reifen. Da der an der Karkasse anhaftende Laufstreifengummi in Umfangsrichtung nicht gedehnt, sondern gegebenenfalls sogar komprimiert wird, wird er weniger anfällig gegenüber Schnittverletzungen. Ein etwaig entstehender Schnitt wird nicht erweitert sondern zusammengedrückt. Bei Schnittverletzungen wird daher eine Rissausbreitung gestoppt bzw. verlangsamt.

### Bezugsziffernliste

- 1 ...............................................: Laufstreifen
- 2 ...............................................: Seitenwand
- 3 ...............................................: Wulstbereich
- 4 ...............................................: Wulstkern
- 5 ...............................................: Karkasse
- 6, 6' ..........................................: Karkasseinlage
- 7 ...............................................: Festigkeitsträger
- α, β ...........................................: Winkel

## Patentansprüche

1. Gürtelloser Fahrzeugluftreifen, insbesondere LKW-Reifen, Industriereifen oder OTR-Reifen, mit einem Verhältnis Querschnittsbreite zu Querschnittshöhe (ermittelt gemäß E.T.R.T.O.-Standards) von 1 oder 0,85 mit einer Karkasse (5) in diagonaler Bauart mit zwei bis sechsundzwanzig übereinander angeordneten Karkasseinlagen (6, 6'), welche jeweils aus einem in eine Gummimatrix eingebetteten Kordgewebe aus textilen, parallel zueinander verlaufenden Festigkeitsträgern (7) bestehen, wobei die Festigkeitsträger (7) im Reifenzenit unter einem in allen Karkasseinlagen (6, 6') gleich großen spitzen Winkel zur Umfangsrichtung verlaufen,
**dadurch gekennzeichnet,**
**dass** der Winkel (α, β), den die Festigkeitsträger (7) mit der Umfangsrichtung im Zenit des Reifens einschließen, bei einem Reifen mit einem Verhältnis Querschnittsbreite zu Querschnittshöhe von 1 zwischen 28° und 34°, bei einem Reifen mit einem Verhältnis Querschnittsbreite zu Querschnittshöhe von 0,85 zwischen 26° und 32° beträgt.

2. Fahrzeugluftreifen nach Anspruch 1, **dadurch gekennzeichnet, dass** der Winkel (α, β), den die Festigkeitsträger (7) in einem Reifen mit einem Verhältnis Querschnittsbreite zu Querschnittshöhe von 1 mit der Umfangsrichtung einschließen, höchstens 32° beträgt.

3. Fahrzeugluftreifen nach Anspruch 1, **dadurch gekennzeichnet, dass** der Winkel (α, β), den die Festigkeitsträger (7) in einem Reifen mit einem Verhältnis Querschnittsbreite zu Querschnittshöhe von 0,85 mit der Umfangsrichtung einschließen, höchstens 30° beträgt.

4. Fahrzeugluftreifen nach einem der Ansprüche 1 bis 3, **dadurch gekennzeichnet, dass** die Anzahl der Karkasseneinlagen (6. 6') zwischen sechs und zweiundzwanzig beträgt.

5. Fahrzeugluftreifen nach Anspruch 4, **dadurch gekennzeichnet, dass** die Anzahl der Karkasseneinlagen (6, 6') zwischen zwölf und achtzehn beträgt.

6. Fahrzeugluftreifen nach einem der Ansprüche 1 bis 5, **dadurch gekennzeichnet, dass** zwei bis vier der Karkasseneinlagen (6') Zwischenbaulagen sind.

## Claims

1. Beltless pneumatic vehicle tire, in particular truck tire, industrial tire or OTR tire, having a ratio of cross-sectional width to cross-sectional height (determined according to E.T.R.T.O. standards) of 1 or 0.85, with a carcass (5) of a diagonal design comprising two to twenty-six carcass inserts (6, 6') arranged one over the other and consisting in each case of a cord fabric embedded in a rubber matrix and consisting of textile, parallel-extending reinforcing elements (7), the reinforcing elements (7) at the zenith of the tire extending in relation to the circumferential direction at an acute angle that is equal in all of the carcass inserts (6, 6'),
**characterized**
**in that** the angle (α, β) that the reinforcing elements (7) form with the circumferential direction at the zenith of the tire in the case of a tire with a ratio of cross-sectional width to cross-sectional height of 1 is between 28° and 34°, in the case of a tire with a ratio of cross-sectional width to cross-sectional height of 0.85 between 26° and 32°.

2. Pneumatic vehicle tire according to Claim 1, **characterized in that** the angle (α, β) that the reinforcing elements (7) form with the circumferential direction in a tire with a ratio of cross-sectional width to cross-sectional height of 1 is at most 32°.

3. Pneumatic vehicle tire according to Claim 1, **characterized in that** the angle (α, β) that the reinforcing elements (7) form with the circumferential direction in a tire with a ratio of cross-sectional width to cross-sectional height of 0.85 is at most 30°.

4. Pneumatic vehicle tire according to one of Claims 1 to 3, **characterized in that** the number of carcass inserts (6, 6') is between six and twenty two.

5. Pneumatic vehicle tire according to Claim 4, **characterized in that** the number of carcass inserts (6, 6') is between twelve and eighteen.

6. Pneumatic vehicle tire according to one of Claims 1 to 5, **characterized in that** two to four of the carcass inserts (6') are breakers.

## Revendications

1. Pneumatique de véhicule sans nappe d'armature, en particulier pneu de camion, pneu industriel ou pneu OTR, avec un rapport largeur de section à hauteur de section (déterminé selon les standards E.T.R.T.O.) de 1 ou 0,85 avec une carcasse (5) de type diagonal avec deux à vingt-six couches de carcasse disposées l'une au-dessus de l'autre (6, 6'), qui se composent chacune d'un tissu de cordes en éléments de résistance textiles (7) s'étendant parallèlement les uns aux autres, noyé dans une matrice de caoutchouc, dans lequel les éléments de résistance (7) s'étendent au zénith du pneu sous un même angle aigu dans toutes les couches de carcasse (6, 6') par rapport à la direction périphérique,
**caractérisé en ce que** l'angle (α, β), que les éléments de résistance (7) forment avec la direction périphérique au zénith du pneu, vaut dans un pneu avec un rapport largeur de section à hauteur de section de 1 entre 28° et 34°, et dans un pneu avec un rapport largeur de section à hauteur de section de 0,85 entre 26° et 32°.

2. Pneumatique de véhicule selon la revendication 1,
**caractérisé en ce que** l'angle (α, β), que les éléments de résistance (7) forment avec la direction périphérique dans un pneu avec un rapport largeur de pneu à hauteur de pneu de 1 vaut au maximum 32°.

3. Pneumatique de véhicule selon la revendication 1,
**caractérisé en ce que** l'angle (α, β), que les éléments de résistance (7) forment avec la direction périphérique dans un pneu avec un rapport largeur de pneu à hauteur de pneu de 0,85 vaut au maximum 30°.

4. Pneumatique de véhicule selon l'une quelconque des revendications 1 à 3, **caractérisé en ce que** le nombre des couches de carcasse (6, 6') vaut entre six et vingt-deux.

5. Pneumatique de véhicule selon la revendication 4, **caractérisé en ce que** le nombre des couches de carcasse (6, 6') vaut entre douze et dix-huit.

6. Pneumatique de véhicule selon l'une quelconque des revendications 1 à 5, **caractérisé en ce que** deux à quatre des couches de carcasse (6') sont des couches de construction intermédiaires.
